(19) Europäisches Patentamt
European Patent Office
Office européen des brevets

(11) Publication number: **0 466 090 A2**

# EUROPEAN PATENT APPLICATION

(21) Application number: **91111396.7**

(22) Date of filing: **09.07.91**

(51) Int. Cl.⁵: **G06F 15/21**

(30) Priority: **10.07.90 JP 182463/90**

(43) Date of publication of application:
**15.01.92 Bulletin 92/03**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Norio, Kawata**
**714-1-C401,Kamiyamacho, Midori-ku**
**Yokohama-shi, Kanagawa, 226(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **System for controlling production and supply at dispersed producing points.**

(57) A control system controls a plurality of producing points (1, 2) which design and produce products according to orders received from customers (4), and has a first producing point (1) used as a center producing point and including a data base (110, 120), second producing points (2) respectively having a data base (111, 121), and one or a plurality of communication networks (3) coupling the data bases of the first producing point and the second producing points. Each of the second producing point (2) includes a first part (106) for making a primary inspection of at least the design which is made in response to an order received from a customer, where the primary inspection includes a validity check of the design, and a second part (106) responsive to the first part for notifying a primary inspection result from the data base of the second producing point to the data base of the first producing point via the communication network. The first producing point (1) includes a third part (103) for making a secondary inspection of the primary inspection result which is received from the second producing point, where the secondary inspection includes an optimization of contents of the primary inspection result, and a fourth part (103) responsive to the third part for notifying a secondary inspection result from the data base of the first producing point to the data base of the second producing point via the communication network.

FIG.3

EP 0 466 090 A2

FIG.5

## BACKGROUND OF THE INVENTION

The present invention generally relates to control systems, and more particularly to a control system for controlling production and supply at dispersed producing points which respectively have the capability to produce products depending on orders received.

Recently, there is a tendency for the producing points to become dispersed to distant regions including overseas locations. Under this situation, there is a demand to unify the technical management standards among the producing points. In addition, there is a demand to centrally manage information related to the design and production at all of the producing points. Such demands arise from the need to prevent inconsistencies in the product quality regardless of the location of each producing point.

Conventionally, each producing point receives the basic design and the basic parts from a head office. A product is then produced at each producing point by making the design in accordance with the customer's order so as to suit the conditions at each location of the producing point.

Particularly when the producing points are dispersed overseas, it becomes necessary to station a technical expert at each producing point. However, it is virtually impossible to station a technical expert at each producing point because it takes time to educate such a technical expert. Accordingly, when the producing points are increased and dispersed rapidly, there is a problem in that it is difficult to cope with such a situation because of the shortage of technical experts.

On the other hand, the products are supplied by inspecting the design data and production data at each producing point according to individual technical management standards. However, there is a problem in that the design quality and the product quality become inconsistent among the producing points.

## SUMMARY OF THE INVENTION

Accordingly, it is a general object of the present invention to provide a novel and useful control system in which the problems described above are eliminated.

Another and more specific object of the present invention is to provide a control system for controlling a plurality of producing points which design and produce products according to orders received from customers, comprising a first producing point which is used as a center producing point and includes a data base, second producing points respectively having a data base, and one or a plurality of communication networks coupling the data bases of the first producing point and the second producing points. Each of the second producing point comprises first means for making a primary inspection of at least the design which is made in response to an order received from a customer, where the primary inspection includes a validity check of the design, and second means, coupled to the data base of the second producing point and responsive to the first means, for notifying a primary inspection result from the data base of the second producing point to the data base of the first producing point via the communication network. The first producing point comprises third means for making a secondary inspection of the primary inspection result which is received from the second producing point, where the secondary inspection includes an optimization of contents of the primary inspection result, and fourth means, coupled to the data base of the first producing point and responsive to the third means, for notifying a secondary inspection result from the data base of the first producing point to the data base of the second producing point via the communication network. According to the control system of the present invention, it is possible to unify the technical management and centrally manage information related to the design and production at each producing point, so as to prevent inconsistencies in the product quality depending on the location of each producing point.

Other objects and further features of the present invention will be apparent from the following detailed description when read in conjunction with the accompanying drawings.

## BRIEF DESCRIPTION OF THE DRAWINGS

FIG.1 is a system block diagram for explaining an operating principle of a control system according to the present invention;

FIG.2 is a system block diagram showing an embodiment of the control system according to the present invention;

FIG.3 is a system block diagram for explaining a technical management structure of the embodiment;

FIG.4 is a flow chart for explaining an operation of the technical management structure;

FIG.5 is a diagram for explaining a failure management structure of the embodiment;

FIG.6 is a diagram for explaining a quality management structure of the embodiment;

FIG.7 is a diagram for explaining an example of a failure management;

FIG.8 is a diagram for explaining a data setting instruction; and

FIG.9 is a diagram for explaining an explanatory diagram information notification.

## DESCRIPTION OF THE PREFERRED EMBODIMENTS

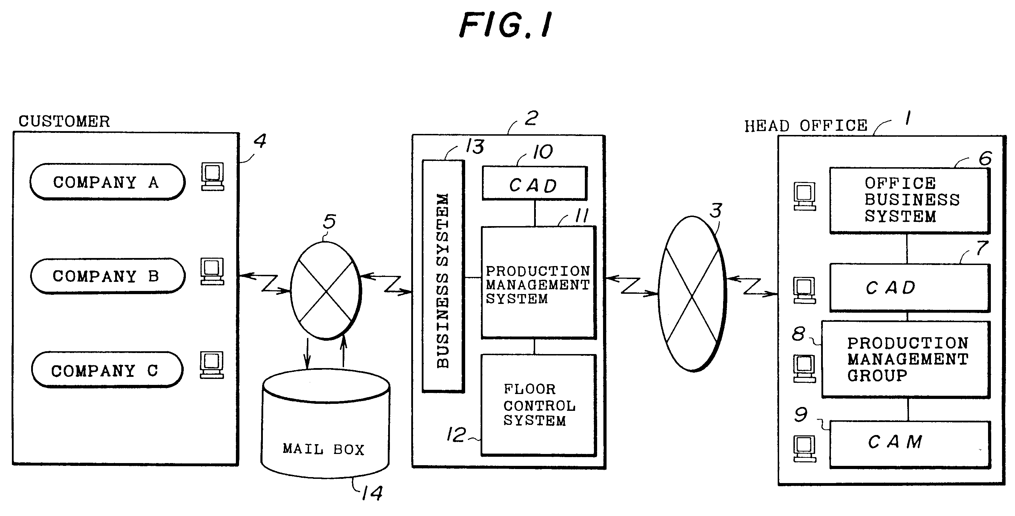

First, a description will be given of an operating principle of a control system according to the present invention, by referring to FIG.1. In FIG.1, a center producing point 1 is coupled to a producing point 2 via a data transmission network 3. For example, the center producing point 1 is the headquarters of business located in a home country, while the producing point 2 is the producing center located in a foreign country. Customers 4 who place orders to the producing point 2 are coupled to the producing point 2 via a data switching network 5. The data switching network 5 is coupled to a mail box 14 which is classified by customer.

The center producing point 1 includes a head office business system 6 which exists in the head office, a computer aided design (CAD) group 7, a production management group 8, and a computer aided manufacturing (CAM) group 9. For example, the head office business system 6 is in charge of export business.

The producing point 2 includes a CAD group 10 which exists in the producing center, a production management system 11, a floor control system 12, and a business system 13. The floor control system 12 controls the facilities of the production floor within the producing point 2. The business system 13 is a system group which makes correspondence with the customers 4.

At the producing point 2, the business system 13 processes the orders received from the customers 4. The CAD group 10 makes designs in accordance with the orders, and the production management system 11 manages the production. In addition, the floor control system 12 is started, and the products corresponding to the orders are delivered to the customers 4.

The CAD group 10 makes a primary inspection with respect to the design, including the validity check of the design result, and notifies the primary inspection result to the center producing point 1 via the data transmission network 3. On the other hand, the center producing point 1 makes a collective inspection with respect to the primary inspection result. In other words, the center producing point 1 makes a secondary inspection, including optimization of the contents of the primary inspection result. The secondary inspection result is notified to one or more concerned producing points 2 via the data transmission network 3.

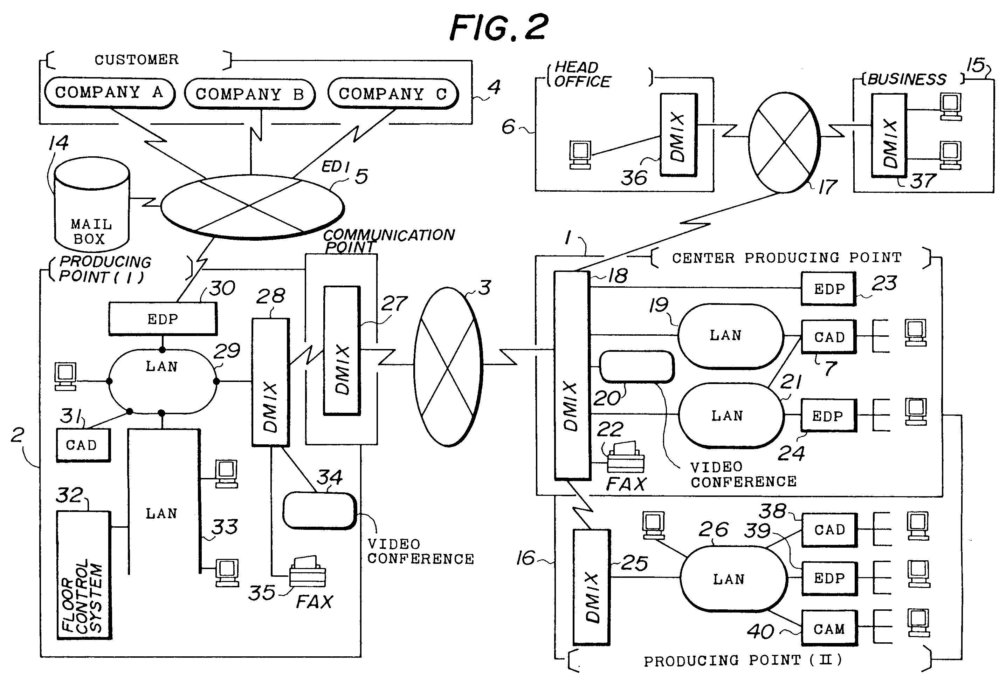

Next, a description will be given of an embodiment of the control system according to the present invention, by referring to FIG.2. In FIG.2, those parts which are the same as those corresponding parts in FIG.1 are designated by the same reference numerals, and a description thereof will be omitted.

A business office 15 is coupled to the head office business system 6 via an internal network 17. The center producing point 1 is coupled to the producing point 2 (hereinafter also referred to as a producing point (I)) located in a foreign country and to a producing point 16 (hereinafter also referred to as a producing point (II)) located within the home country. The business office 15 includes a transmission/reception equipment 37, and the head office business system 6 includes a transmission/reception equipment 36.

The center producing point 1 includes a transmission/reception equipment 18, optical local area networks (LANs) 19 and 21 which employ optical communication, a video conference equipment 20, a facsimile machine 22, a data processor 23 and 24, and a CAD group 7. The producing point 16 (I) includes a transmission/reception equipment 25, an optical LAN 26, a CAD group 38, a data processor 39 and a CAM group 40. The producing point 2 (I) includes a communication point which includes a transmission/reception equipment 27, a transmission/reception equipment 28, a multi-purpose LAN 29, a data processor 30, a processor 31 for CAD and production management, a floor control system 32, a LAN 33, a video conference system 34 and a facsimile machine 35.

The producing point 2 (I) is coupled to the center producing point 1 via the data transmission network 3. The producing point 16 (II), the head office business system 6 and the business office 15 are coupled to the center producing point 1 via a data transmission line or the internal network 17. The groups within the center producing point 1 are coupled via the optical LANs 19 and 21.

The producing point 2 (I) is coupled to the data transmission network 3 via the transmission/reception equipments 27 and 28. The data processor 30 of the producing point 2 (I) is coupled to the data switching network 5 to which the customers 4 and the mail box 14 are coupled. A high-speed communication is possible among groups within the producing point 2 (I) by use of the multi-purpose LAN 29. The data processor 30 and the processor 31 are coupled to the transmission/reception equipment 29 via the multipurpose LAN 29, while the floor control system 32 is coupled to the transmission/reception equipment 29 via the LAN 33 and the multi-purpose LAN 29. The video conference system 34 and the facsimile machine 35 are coupled to the transmission/reception equipment 28.

The producing point 16 (II) is coupled to the center producing point 1 via the transmission/reception equipment 25. The CAD group 38, the data processor 39 and the CAM group 40 are coupled to the transmission/reception equipment 25 via the optical LAN 26.

For example, the data transmission network 3 is formed from two data transmission networks respectively having transmission rates of 768 kbps and 512 kbps. A video conference is made between the producing point 2(I) and the center producing point 1 using the video conference systems 34 and 20 if necessary.

The correspondence of the blocks shown in FIGS.1 and 2 are as follows. The production management group 8 shown in FIG.1 corresponds to the data processors 23 and 24 shown in FIG.2. The CAM group 9 shown in FIG.1 corresponds to the floor control system 32 or the CAM group 40 shown in FIG.2. The CAD group 10 show in FIG.1 corresponds to the processor 31 or the CAD group 38 shown in FIG.2. The production management system 11 shown in FIG.1 corresponds to the data processors 23 and 24 shown in FIG.2. The floor control system 12 shown in FIG.1 corresponds to floor control system 32 shown in FIG.2. The business system 13 shown in FIG.1 corresponds to the data processor 30 shown in FIG.2.

As may be seen by comparing FIGS.1 and 2, not all of the parts within the center producing point 1 shown in FIG.1 are provided within the center producing point 1 shown in FIG.2. This is because FIG.1 merely shows one block system for explaining the operating principle of the present invention. In other words, the various functions of the producing points can be distributed among the producing points where possible as long as the same functions can be realized.

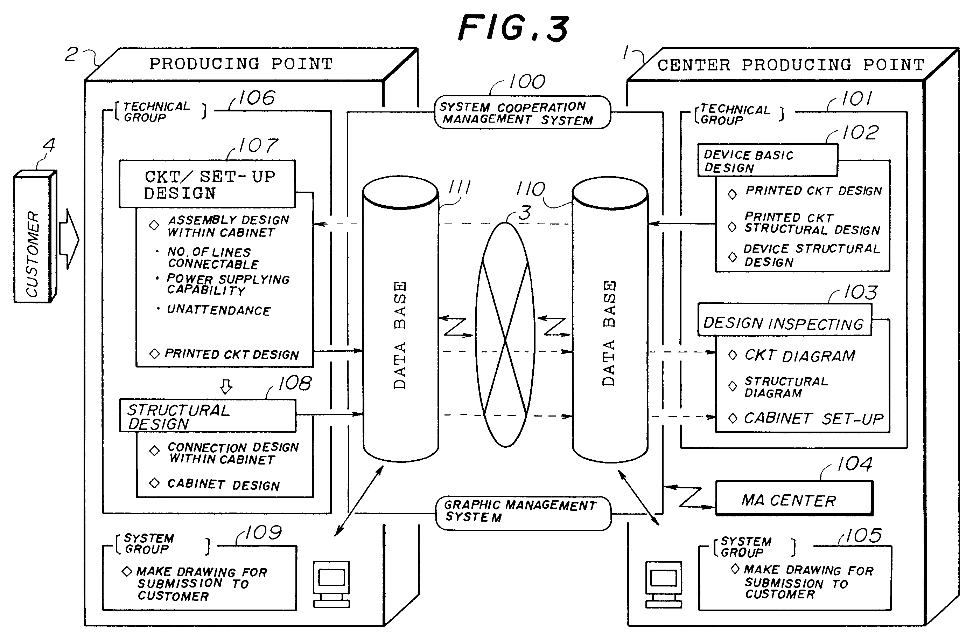

Next, a description will be given of a technical management structure of this embodiment, by referring to FIG.3. In FIG.3, those parts which are the same as those corresponding parts in FIG.1 are designated by the same reference numerals, and a description thereof will be omitted.

In FIG.3, the center producing point 1 includes a technical group 101, a manufacturing automation (MA) center 104 and a system group 105. The technical group 101 includes a device basic design part 102 and a design inspecting part 103. The producing point 2 includes a technical group 106 and a system group 109. The technical group 106 includes a circuit/set-up design part 107 and a structural design part 108. The circuit/set-up design part 107 designs the circuit, arrangement, shape, size and the like of the product according to the order from the customer 4.

A system cooperation/graphic management system 100 couples the center producing point 1 and the producing point 2. The system cooperation/graphic management system 100 includes design data bases 110 and 111, and the data transmission network 3. Actually, the design data base 110 belongs to the center producing point 1 and the design data base 111 belongs to the producing point 2. The design data base 110 corresponds to the production management group 8 shown in FIG.1, and the design data base 111 corresponds to the production management system 11 shown in in FIG.1.

The device basic design part 102 of the center producing point 1 carries out the printed circuit design, the printed circuit structural design, and the device structural design, and stores the result of the basic design into the design data base 110. The result of the basic design is transferred to the design data base of the producing part 2 via the data transmission network 3.

At the producing point 2, the circuit/set-up design part 107 makes the assembly design within the cabinet and the printed circuit design based on the result of the basic design, in correspondence with the order received from the customer 4. The assembly design within the cabinet includes designing (i) the number of lines connectable, (ii) the power supplying capability of the power source, (iii) the unattendance and the like in accordance with the customer's demands. On the other hand, the structural design part 108 makes the connection design within the cabinet and the cabinet design. The cabinet design includes designing the shape, thickness and the like of the cabinet.

The design results from the circuit/set-up design part 107 and the structural design part 108 are subjected to the primary inspection which includes a validity check of the design results and then stored in the design data base 111. In addition, the design results are transferred to the design data base 110 of the center producing point 1 via the data transmission network 3.

At the center producing point 1, the design inspection part 103 receives the contents of the design results transferred from the design data base 111, and carries out a collective inspection, that is, a secondary inspection. The secondary inspection includes optimizing the circuit diagram, the set-up diagram, the cabinet structure and the like. The secondary inspection result is notified to the producing point 2. The secondary inspection result may include a product adjusting instruction which instructs adjustment of the product production to the producing point 2. Of course, the producing point 2 produces the products according to the customer's order so as to reflect the secondary inspection result.

During the communication between the producing point 2 and the center producing point 1 described above, the necessary information such as graphic information is transmitted and received between the system group 109 and the system group 105 or the MA center 104.

For example, the primary inspection result may indicate that the product produced at a producing point 2 satisfies the demands of the customer and also conforms to the standards set for the producing point 2. However, even when the primary inspection result of the product produced at the producing point 2 is acceptable, this does not necessarily mean that this product conforms to the universal standards set at the center producing point 1. In other words, when the product produced at the producing point 2 does not conform to the universal standard, this product cannot be used together with a product which is produced at the center producing point 1 to conform to the universal standards. On the other hand, it is difficult from the practical point of view to carry out all the necessary inspections at each producing point 2. For this reason, the primary inspection is made at each producing point 2, and the secondary inspection is only made at the center producing point 1 in response to the primary inspection result from each producing point 2.

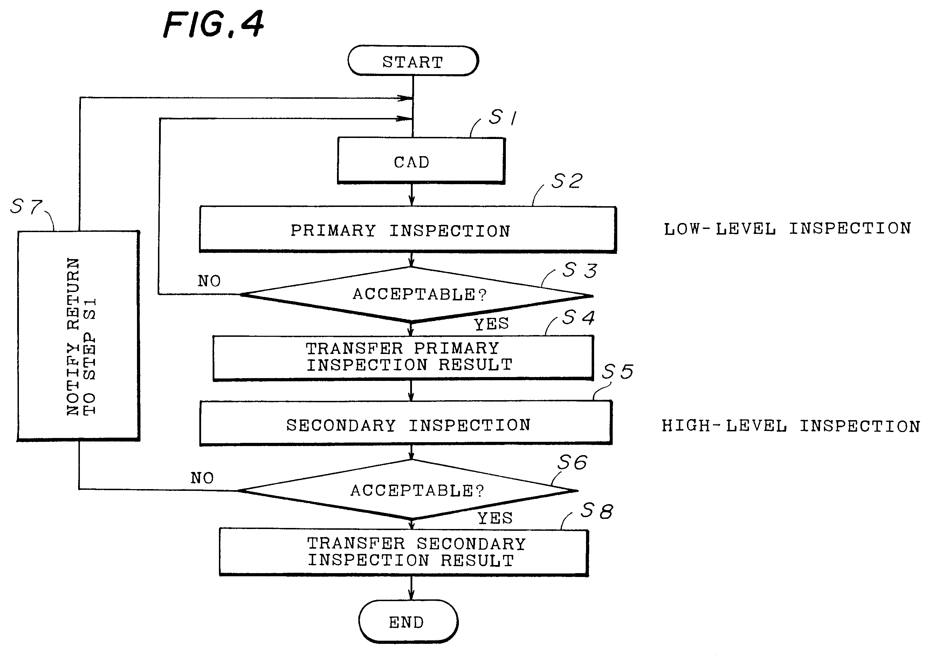

FIG.4 is a flow chart for explaining an operation of the technical management structure shown in FIG.3. In FIG.4, a step S1 makes a CAD at the producing point 2 in correspondence with the customer's order. A step S2 makes a primary inspection at the producing point 2. For example, the primary inspection includes (i) making function inspection and circuit inspection (circuit analysis) of the printed circuit design and (ii) making parts connection check and the appropriateness check (averaging) of the arrangement of parts. A step S3 judges whether or not the primary inspection result is acceptable. The process returns to the step S1 when the judgement result in the step S3 is NO, but the process advances to a step S4 when the judgement result in the step S3 is YES.

The step S4 transfers the primary inspection result to the center producing point 1, and a step S5 makes a secondary inspection at the center producing point 1. For example, the secondary inspection includes with respect to the printed circuit design (i) optimizing the circuit structure by considering the number of parts, circuit margin and the like, and making appropriateness check of the parts used by considering the cost, common usage and the like. The secondary inspection includes with respect to the printed circuit structural design (ii) examining the coordination of the entire device, making collective inspection by collation with a known data base, examining the arrangement of parts and interconnection patterns from an electrical point of view, examining the facility of the production and test, examining the operational characteristics such as the operation of a front panel and the like. A step S6 judges whether or not the secondary inspection result is acceptable.

When the judgement result in the step S6 is NO, a step S7 instructs the return of the process to the step S1 and this instruction is notified to the producing point 2. On the other hand, when the judgement result in the step S6 is YES, a step S8 notifies the acceptable secondary inspection result to the producing point 2 and the process ends.

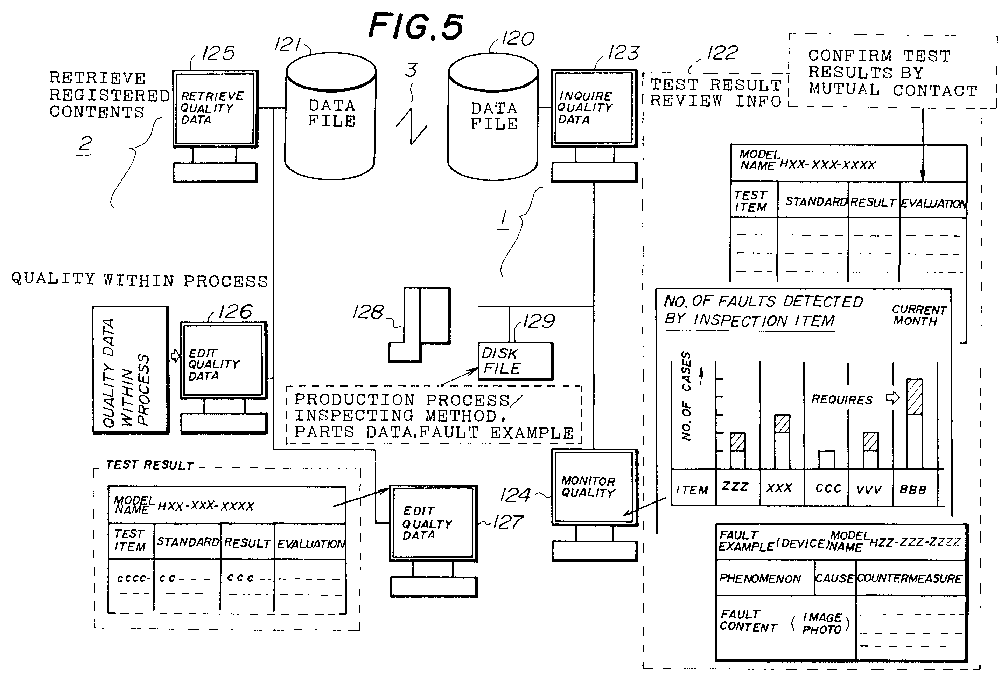

Next, a description will be given of a fault management structure of this embodiment, by referring to FIG.5. In FIG.5, those parts which are the same as those corresponding parts in FIG.1 are designated by the same reference numerals, and a description thereof will be omitted.

In this embodiment, faults and test results from each producing point 2 are centrally managed in the center producing point 1 via the data transmission network 3. In other words, at each producing point 2, a data processing unit 126 collects quality data within each process, and a data processing unit 127 collects test results of various devices and parts. The quality data and test results from the data processing units 126 and 127 are stored in a data file 121. The stored contents in the data file 121 can be retrieved from a data processing unit 125, and can also be transferred to a data file 120 at the center producing point 1 via the data transmission network 3.

At the center producing point 1, various production methods, inspecting methods, parts data and failure examples are stored in a disk file 129. The contents which are transferred from the data file 121 of each producing point 2 are additionally stored in the disk file 129. A camera 128 for picking up materials is coupled to the disk file 129 and a data processing unit 123.

As indicated by test result review information 122, a data processing unit 124 carries out operations such as checking test items for products with various models and characters, obtaining statistics of the number of faults detected by inspection item, and collecting fault examples. The results obtained by these operations of the data processing unit 124 are also stored in the disk file 129. If needed, the results are stored in the data file 120 and is notified to the producing point 2 via the data transmission network 3. Hence, the quality management is centralized to the center producing point 1, and the required measures can be reflected at each of the producing points 2.

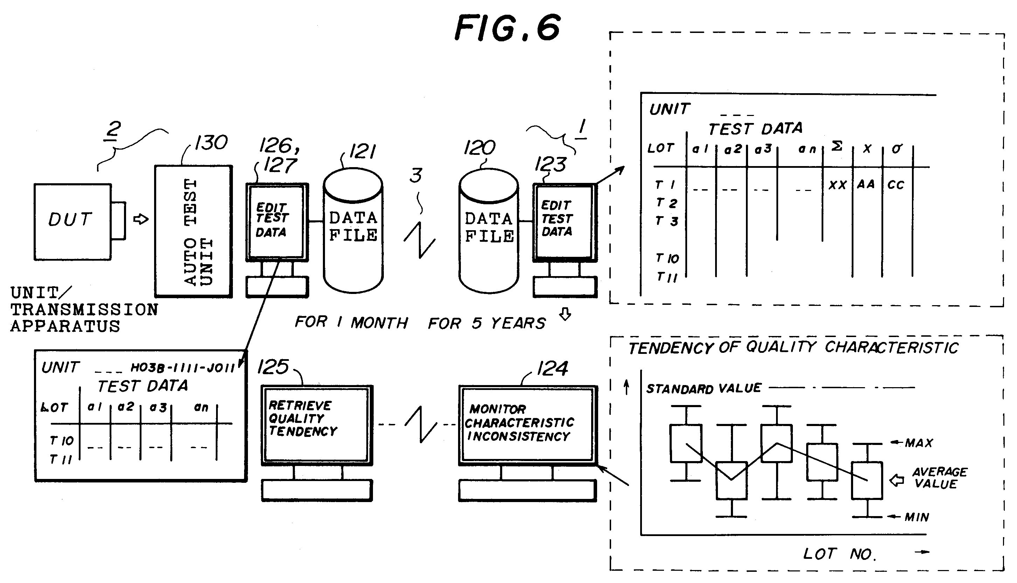

FIG.6 is a diagram for explaining a quality management structure of this embodiment. In FIG.6, those parts which are the same as those corresponding parts in FIG.5 are designated by the same reference numerals, and a description thereof will be omitted. In FIG.6, the producing point 2 includes an automatic test unit 130.

The test results are collected in the form of test data $a_1$, $a_2$, $a_3$, ..., $a_n$ in correspondence with lots $T_{10}$, $T_{11}$, ... for each unit, for example, and transferred to the data file 120 of the center producing point 1 via the data file 121. At the center producing point 1, the test data $a_1$, $a_2$, $a_3$, ..., $a_n$ are tabulated in correspondence with the lots $T_{10}$, $T_{11}$, ... for each unit, and a total $\Sigma$, an average value X, a deviation $\sigma$ and the like are calculated. The inconsistency of the average value and the like are checked in correspondence with the lot number, so as to examine the tendency of the quality characteristic. The result of examination is notified to each producing point 2.

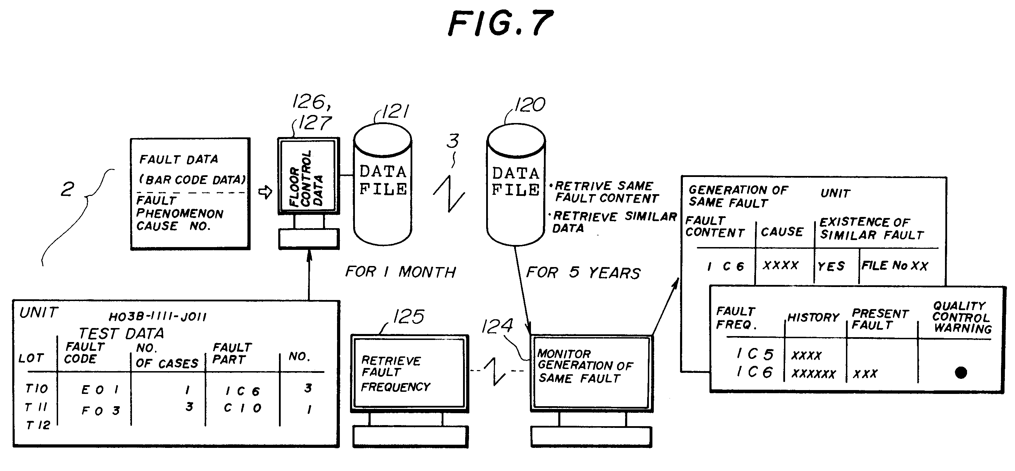

FIG.7 is a diagram for explaining an example of a failure management. In FIG.7, those parts which are the same as those corresponding parts in FIG.5 are designated by the same reference numerals, and a description thereof will be omitted.

At each producing point 2, the fault parts, the number of faults and the like are collected in correspondence with the lots $T_{10}$, $T_{11}$, ... for each unit and notified to the center producing point 1. At the center producing point 1, a check is made regarding similar faults, and a quality control warning is generated if needed depending on the history.

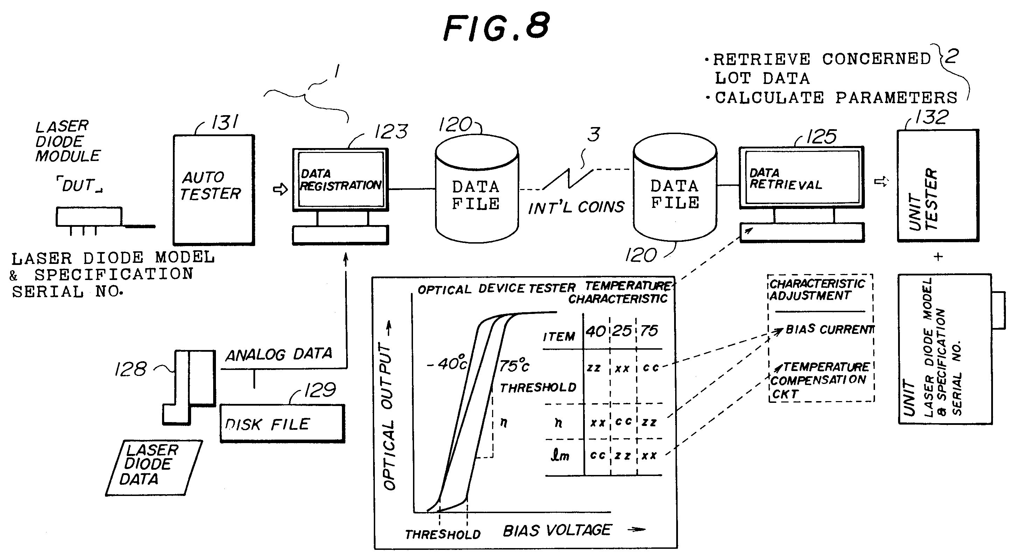

FIG.8 is a diagram for explaining a data setting instruction. In FIG.8, those parts which are the same as those corresponding parts in FIG.5 are designated by the same reference numerals, and a description thereof will be omitted. The center producing unit 1 includes an optical device automatic tester 131, and the producing point 2 includes a unit tester 132.

At the center producing point 1, a data for making an initial setting of a certain optical device, such as a laser diode, is formed in correspondence with this certain optical device. In other words, desirable values for a threshold value, optical output/bias voltage slope, the optical output and the like are formed in correspondence with the ambient temperature, for example, and notified to each producing point 2. At each producing point 2, the initial setting is made with respect to the optical device by taking the ambient temperature into consideration based on the data notified from the center producing point 1.

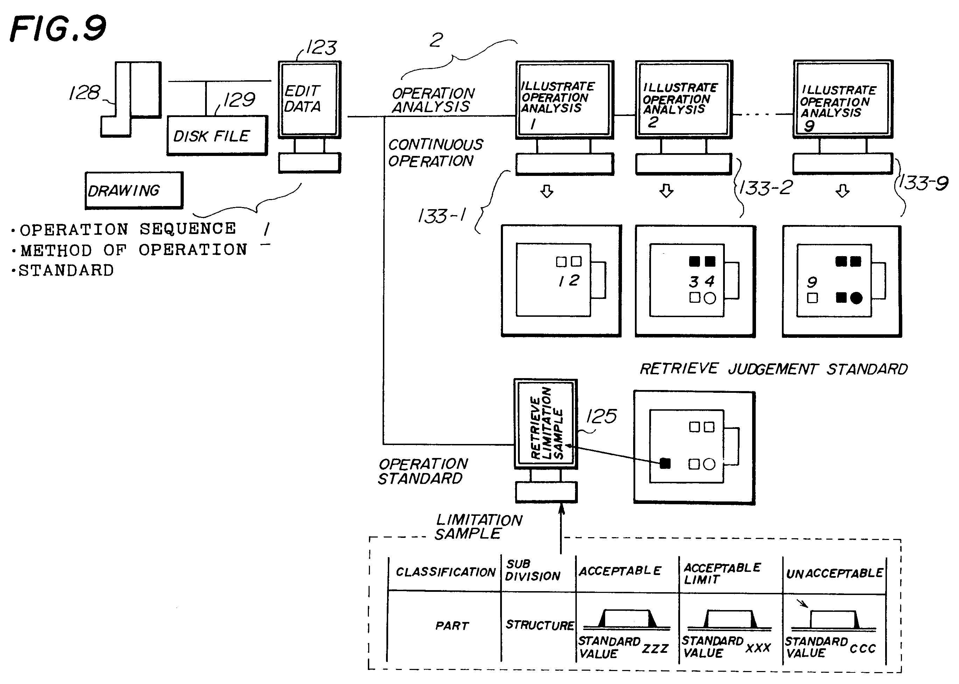

FIG.9 is a diagram for explaining an explanatory diagram information notification. In FIG.9, those parts which are the same as those corresponding parts in FIG.5 are designated by the same reference numerals, and a description thereof will be omitted. In FIG.9, explanatory diagram instruction displays are denoted by 133-1, 133-2, ... .

When the display of the limitation sample related to soldering is retrieved by the data processing unit 125 of the producing point 2, for example, a corresponding "limitation sample" shown in FIG.9 is transferred from the disk file 129 of the center producing point 1 to the producing point 2 and displayed on the data processing unit 125.

On the other hand, when the data processing unit 125 of the producing point 2 requests the display of the operation sequence, the information related to the operation sequence is transferred from the disk file 129 of the center producing point 1 to the producing point 2 and displayed on the data processing unit 125 in the form of the explanatory diagram instruction displays 133-1, 133-2, ... as shown in FIG.9. Each explanatory diagram instruction display illustrates the operatoin analysis, that is, a specific part of the operation.

Further, the present invention is not limited to these embodiments, but various variations and modifications may be made without departing from the scope of the present invention.

Reference signs in the claims are intended for better understanding and shall not limit the scope.

## Claims

1. A control system for controlling a plurality of producing points (1, 2, 16) which design and produce products according to orders received from customers (4), characterized in that said control system comprises:

    a first producing point (1) which is used as a center producing point and includes a data base (110, 120);

    second producing points (2, 16) respectively having a data base (111, 121); and

    one or a plurality of communication networks (3) coupling the data bases of said first producing point and said second producing points,

    each of said second producing point comprising:

    first means (106) for making a primary inspection of at least the design which is made in response to an order received from a customer, said primary inspection including a validity check of the design; and

    second means (106), coupled to the data base of said second producing point and responsive to the first means, for notifying a primary inspection result from the data base of said second producing point to the data base of said first producing point via said communication network,

    said first producing point comprising:

    third means (103) for making a secondary inspection of the primary inspection result which is received from said second producing point, said secondary inspection including an optimization of contents of the primary inspection result; and

    fourth means (103), coupled to the data base of said first producing point and responsive to the third means, for notifying a secondary inspection result from the data base of said first producing point to the data base of said second producing point via said communication network.

2. The control system as claimed in claim 1, characterized in that said second means (106) includes means for storing the primary inspection result in the data base (111, 121) of said second producing point (2), 16), and said fourth means (103) notifies the secondary inspection result to at least one of said second producing points, said primary inspection result including test results of tests which are carried out with respect to processes and/or products within a management range of each second producing point, said secondary inspection result including measures to be taken in response to the test results.

3. The control system as claimed in claim 1 or 2, characterized in that said fourth means (103) notifies a product adjusting instruction which instructs adjustment of the product production to the data base (111, 121) of said second producing point (2, 16) via said communication network (3).

4. The control system as claimed in any of claims 1 to 3, characterized in that said fourth means (103) notifies an explanatory diagram instruction which instructs display of explanatory diagrams to the data base (111, 121) of said second producing point (2, 16) via said communication network (3).

5. The control system as claimed in any of claims 1 to 4, characterized in that said first producing point (1) includes a computer aided design system (7), a production management system (8, 23, 24), and an internal local area network (19, 21) which couples the computer aided design system and the production management system.

6. The control system as claimed in any of claims 1 to 5, characterized in that said second producing point (2, 16) includes a computer aided design system (10), a production management system (11), and an internal local area network (26, 29, 33) which couples the computer aided design system and the production management system.

7. The control system as claimed in any of claims 1 to 6, characterized in that there is further provided a mail box (14) which is classified by customer who places orders, said mail box being coupled to the communication network (3) which couples said first and second producing points (1; 2, 16).

8. The control system as claimed in any of claims 1 to 7, characterized in that said first producing point (1) further includes a video conference system (20) and each at least one of said second producing point (2, 16) further includes a video conference system (34), so that a video conference between the two video conference systems is possible via the communication network (3).

FIG.1

CUSTOMER

COMPANY A

COMPANY B

COMPANY C

MAIL BOX

BUSINESS SYSTEM

CAD

PRODUCTION MANAGEMENT SYSTEM

FLOOR CONTROL SYSTEM

HEAD OFFICE

OFFICE BUSINESS SYSTEM

CAD

PRODUCTION MANAGEMENT GROUP

CAM

EP 0 466 090 A2

FIG. 2

# FIG.3

**PRODUCING POINT** (2)

[TECHNICAL GROUP] 106

CUSTOMER (4)

CKT/ SET-UP DESIGN 107
- ◇ ASSEMBLY DESIGN WITHIN CABINET
  - · NO. OF LINES CONNECTABLE
  - · POWER SUPPLYING CAPABILITY
  - · UNATTENDANCE
- ◇ PRINTED CKT DESIGN

STRUCTURAL DESIGN 108
- ◇ CONNECTION DESIGN WITHIN CABINET
- ◇ CABINET DESIGN

[SYSTEM GROUP] 109
- ◇ MAKE DRAWING FOR SUBMISSION TO CUSTOMER

SYSTEM COOPERATION MANAGEMENT SYSTEM 100

DATA BASE 111

DATA BASE 110

3

GRAPHIC MANAGEMENT SYSTEM

**CENTER PRODUCING POINT** (1)

[TECHNICAL GROUP] 101

DEVICE BASIC DESIGN 102
- ◇ PRINTED CKT DESIGN
- ◇ PRINTED CKT STRUCTURAL DESIGN
- ◇ DEVICE STRUCTURAL DESIGN

DESIGN INSPECTING 103
- ◇ CKT DIAGRAM
- ◇ STRUCTURAL DIAGRAM
- ◇ CABINET SET-UP

MA CENTER 104

[SYSTEM GROUP] 105
- ◇ MAKE DRAWING FOR SUBMISSION TO CUSTOMER

# FIG.4

START

S1 — CAD

S2 — PRIMARY INSPECTION — LOW-LEVEL INSPECTION

S3 — ACCEPTABLE?

NO / YES

S4 — TRANSFER PRIMARY INSPECTION RESULT

S5 — SECONDARY INSPECTION — HIGH-LEVEL INSPECTION

S6 — ACCEPTABLE?

NO / YES

S7 — NOTIFY RETURN TO STEP S1

S8 — TRANSFER SECONDARY INSPECTION RESULT

END

EP 0 466 090 A2

**FIG.5**

# FIG.6

UNIT / TRANSMISSION APPARATUS

AUTO TEST UNIT 130

EDIT TEST DATA 126, 127

DATA FILE 121

3

DATA FILE 120

EDIT TEST DATA 123

FOR 1 MONTH    FOR 5 YEARS

DUT    2

| UNIT | H03B-1111-J011 | | | | |
|------|------|------|------|------|
| | TEST DATA | | | | |
| LOT | a1 | a2 | a3 | | an |
| T 10 | -- | -- | -- | | -- |
| T 11 | -- | -- | -- | | -- |

RETRIEVE QUALITY TENDENCY 125

MONITOR CHARACTERISTIC INCONSISTENCY 124

| UNIT | | | | | | | | |
|------|----|----|----|----|----|---|---|---|
| | TEST DATA | | | | | | | |
| LOT | a1 | a2 | a3 | | an | Σ | X | σ |
| T 1 | -- | -- | -- | | -- | XX | AA | CC |
| T 2 | | | | | | | | |
| T 3 | | | | | | | | |
| T 10 | | | | | | | | |
| T 11 | | | | | | | | |

TENDENCY OF QUALITY CHARACTERISTIC

STANDARD VALUE

← MAX

⇐ AVERAGE VALUE

← MIN

LOT NO. →

# FIG.7

FAULT DATA

(BAR CODE DATA)

FAULT
PHENOMENON
CAUSE NO.

FLOOR CONTROL DATA

126, 127

121

DATA FILE

FOR 1 MONTH

120

DATA FILE

• RETRIVE SAME FAULT CONTENT
• RETRIEVE SIMILAR DATA

FOR 5 YEARS

3

| UNIT | H03B-1111-J011 |  |  |  |
|------|------|------|------|------|
|  | TEST DATA |  |  |  |
| LOT | FAULT CODE | NO. OF CASES | FAULT PART | NO. |
| T 10 | E 0 1 | 1 | I C 6 | 3 |
| T 11 | F 0 3 | 3 | C 1 0 | 1 |
| T 12 |  |  |  |  |

125

RETRIEVE FAULT FREQUENCY

124

MONITOR GENERATION OF SAME FAULT

| GENERATION OF SAME FAULT |  | UNIT |  |
|------|------|------|------|
| FAULT CONTENT | CAUSE | EXISTENCE OF SIMILAR FAULT |  |
| I C 6 | XXXX | YES | FILE No XX |

| FAULT FREQ. | HISTORY | PRESENT FAULT | QUALITY CONTROL WARNING |
|------|------|------|------|
| I C 5 | XXXX |  |  |
| I C 6 | XXXXXX | XXX | ● |

2

15

EP 0 466 090 A2

EP 0 466 090 A2

# FIG.8

· RETRIEVE CONCERNED 2
 LOT DATA
· CALCULATE PARAMETERS

*LASER DIODE MODULE*

「DUT」

**AUTO TESTER** — 131

**DATA REGISTRATION** — 123

1

**DATA FILE** — 120

*INT'L COINS* — 3

**DATA FILE** — 120

**DATA RETRIEVAL** — 125

*UNIT TESTER* — 132

LASER DIODE MODEL & SPECIFICATION SERIAL NO.

128

*ANALOG DATA*

**DISK FILE** — 129

*LASER DIODE DATA*

OPTICAL DEVICE TESTER TEMPERATURE CHARACTERISTIC

OPTICAL OUTPUT →

$-40°c$   $75°c$

THRESHOLD

$n$

THRESHOLD   BIAS VOLTAGE →

| ITEM | 40 | 25 | 75 |
|------|----|----|----|
| THRESHOLD | $zz$ | $xx$ | $cc$ |
| $n$ | $xx$ | $cc$ | $zz$ |
| $lm$ | $cc$ | $zz$ | $xx$ |

CHARACTERISTIC ADJUSTMENT

→ BIAS CURRENT

→ TEMPERATURE COMPENSATION CKT

*UNIT*

LASER DIODE MODEL & SPECIFICATION SERIAL NO.

# FIG.9

EP 0 466 090 A2